# EUROPEAN PATENT SPECIFICATION

(11) **EP 1 902 626 B1**
(45) Date of publication and mention of the grant of the patent: **22.10.2014**
(21) Application number: 06780802.2
(22) Date of filing: 05.07.2006
(51) Int. Cl.: A23D 9/00, A23L 1/221, A23L 1/39

(54) **FLAVOR WITH COOKED-OIL NOTE AND PROCESS FOR PRODUCING THE SAME**
GESCHMACK MIT NOTE VON GEKOCHTEM ÖL UND HERSTELLUNGSVERFAHREN DAFÜR
AGENT DE SAVEUR À L ARÔME D HUILE CUISINÉE ET SON PROCÉDÉ DE FABRICATION

(30) Priority: 06.07.2005 JP 2005197666
(43) Date of publication of application: 26.03.2008
(73) Proprietor: Takasago International Corporation, Tokyo-to 144-8721 (JP)
(72) Inventor: SUGIURA, Yoshio, Takasago Intern. Corporation, Hiratsuka-shi Kanagawa 254-0073 (JP); WATANABE, Akihiko, Takasago Intern. Corporation, Hiratsuka-shi Kanagawa 254-0073 (JP)
(74) Representative: Neidl-Stippler, Cornelia
(86) International application number: PCT/JP2006/313426
(87) International publication number: WO 2007/004682

(56) References cited:
- EP-A- 0 295 509
- EP-A- 0 321 092
- WO-A-97/03566
- JP-A- 09 009 907
- JP-A- 60 256 344
- US-A- 3 579 349
- US-A- 4 466 986
- US-A- 5 073 398
- US-A- 5 158 795
- US-A- 6 117 469

## Description

### Technical Field

The present invention relates to an oil-based processed flavor with cooked note and a method for producing the same. Specifically, the invention relates to an oil-based processed flavor with a cooked note, which has a cooked taste of a food suchasameat, seafood, milk or dairy product, seaweed, vegetable, fruit, grain, nut, coffee, tea, bean, or spice, or processed product thereof, and a method for producing the same.

### Background Art

There has been widely conducted to cook with flavored oil, which is made by frying a food such as a meat, seafood, milk or dairy product, seaweed, or vegetable together with an edible oil and/or fat to bring out the flavor taste and "umami" taste of the food and transfer the flavor taste and "umami" taste thereof to the oil and/or fat. Thus oil-based processed flavors with a cooked note are ones prepared by transferring flavors brought out by frying an animal or plant material to oil. The flavors have been used on preparing foods or beverages, especially prepared foods primarily for the purposes of compensating flavors (tastes) lost during processing, manufacturing or storage thereof and adding a cooked taste developed during cooking thereto, thereby increasing their palatability. The flavors have been used in a broad range of foods including various prepared foods, confectionery, bakery products, chocolates, chewinggums, and margarines. In recent years, oil-based processed flavors with a cooked note having the exactly same flavor as that developed during cooking are required with the increase in the demand for a real thing of various foods.

Examples of known methods for producing oil-based processed flavors with a cooked note include the followings. A first example is a method of placing a food such as a meat, seafood, or vegetable in an autoclave together with an edible oil and/or fat of animal or vegetable origin, and heating them under pressure, thereby to transfer the taste and flavor of the meat, seafood, or vegetable to the edible oil and/or fat of animal or vegetable origin (see Patent Document 1 below) . The oil-based processed flavor with a cooked note prepared by the method has high potency, but emits an undesirable reaction off-flavor (off-flavor in closed systems). A second example is a method of heating a food such as a meat, seafood, or vegetable together with an edible oil and/or fat in an open vessel (see Patent Document 2 below). An oil-based processed flavor with a cooked note prepared by the method provides a natural cooked taste and a roasted taste, but lacks in a top flavor, so that it has low potency and an insufficient impact. A third example is a method of leaving a food such as a meat, seafood, or vegetable in an edible oil at room temperature, or heating a material to be extracted (that is, a raw material to be extracted) at low temperature together with an edible oil and/or fat, thereby transferring the taste and flavor of the meat, seafood, or vegetable to the oil. An oil-based processed flavor with a cooked note prepared by the method has a natural flavor because the original flavor of the material has been transferred to the oil, but has a weak cooked effect and low potency.
Patent Document 1: Japanese Patent Application Laid-Open (JP-A) No. 60-256344
Patent Document 2: JP-A-62-6651

The above-described methods are typical methods for producing an oil-based processed flavor with a cooked note. Other examples include a method comprising the steps of adding a vegetable to an edible vegetable oil, leaving the mixture at a temperature of 0 to 30°C or heating it at a temperature of 60 to 100°C, removing an oil phase to collect a vegetable residue, heating the vegetable residue together with an edible vegetable oil at a temperature of 110 to 170°C, and collecting the oil phase, followed by mixing the oil phase with an oil-soluble processed flavor taken from a spice (see Patent Documents 3 and 4 below), a method comprising the steps of distilling juice or coffee to obtain a distillate containing a flavor component, contacting the distillate with an absorbent of reversed-phase partition type, and then extracting the flavor component with a solvent (see Patent Document 5 below), a method comprising the steps of transferring a flavor component in a liquid or solid state to carbon dioxide in a liquid or supercritical state by dissolution, and then allowing the flavor component in the carbon dioxide to be absorbed into an edible oil or the like thereby to produce a flavored oil (see Patent Documents 6 and 7 below), and a method comprising the steps of subjecting a plant material such as a fresh vegetable, fruit, spice, coffee, or tea to gas-liquid countercurrent contact extraction, and then extracting the collected flavor with an oil (see Patent Document 8 below). However, these methods require complicated processes, and require cares, manpower or additional devices.
Patent Document 3: JP-A-58-31936
Patent Document 4: JP-A-58-121751
Patent Document 5: JP-A-3-91456
Patent Document 6: JP-A-6-125707
Patent Document 7: JP-A-6-133725
Patent Document 8: JP-A-2002-105485

Although not a method for producing an oil-based processed flavor with a cooked note, there is a method of producing a flavored liquid comprising the steps of heating a vegetable, meat, seafood, grain, bean, fruit, or potato in a closed vessel, collecting a gas generated during heating, and cooling the gas to liquefy it (see Patent Documents 9 to 11 below). However, under the method, it is difficult to collect a sufficient amount of a flavored liquid having an intended flavor, and it is also difficult to obtain a highly palatable flavored liquid having a cooked note.
Patent Document 9: JP-A-7-184589
Patent Document 10: JP-A-9-9907
Patent Document 11: JP-A-9-9909

US4466986A relates to a process for producing an artificial flavour resembling meat in its taste. To this end a (vegetable) protein hydrolysate - preferably a fractionated hydrolysate - is used as starting material and a flavour-carrying fat combined therewith. Thus US4466986A uses a protein hydrolysate as carrier and combines it with flavour of the already flavored (chicken) fat

EP 0321092A produces fatty acid esters by gas-extraction of the already flavoured product and uses the gas-carried aroma components only for flavouring the vegetable oil.

US 5073398A extracts only volatile components from a material and inserts them into seasoned vegetable oil.

US 3579349A produces water-soluble extracts from chocolate.

JP 60 266344A does relate to fat-extraction of material, but there is no collection of any volatiles produced. So only a fraction of the aroma compounds is transferred into fat.

### Disclosure of the Invention

### Problems to be Solved by the Invention

The present invention provides an oil-based processed flavor with a cooked note and a method for producing the same, the flavor presenting none of the above-described problems, or solving the above-described problems.

More specifically, an object of the present invention is to provide a highly palatable oil-based processed flavor with a cooked note, which has high potency, a strong impact, and a natural cooked odor, and emits no undesirable reaction off -flavor (off-flavor in closed systems).

Another object of the present invention is to provide a method for producing an oil-based processed flavor with a cooked note having excellent properties using an existing apparatus which has been used for producing an oil-based processed flavor with a cooked note as it is, without requiring additional complicated processes.

Still another object of the present invention is to provide a blended flavor containing the oil-based processed flavor with a cooked note and foods or beverages prepared using the same.

### Means for Solving the Problem

As a result of the eager investigation to solve the above-described problems, the inventors have found that an oil-based processed flavor with a cooked note having excellent properties can be produced in the following manner. A material to be extracted (raw material to be extracted) and an edible oil and/or fat are placed in an extraction vessel equipped with a device for collecting vapor and gases, such as a condenser. The mixture is heated, followed by cooling the resultant extract. Then, the distillate collected through the condenser during heating is returned to the extraction vessel, or alternatively the distillate is further extracted with an edible oil to return the resultant oil extract of the distillate to the extraction vessel. The present invention has been accomplished on the basis of the finding.

The oil-based processed flavor with a cooked note, method for producing the same, blended flavor containing the same, and foods or beverages containing the same according to the invention, which achieve the above-described objects, have the following features.
(1) A method for producing an oil-based processed flavor with a cooked note according to claim 1.
(2) The method for producing a oil-based processed flavor with a cooked note according to items (1), wherein the flavor-containing material to be extracted and the edible oil and/or fat are heated at a temperature between 80°C to 300°C, preferably between 90°C to 200°C, and more preferably between 100°C to 150°C to produce a flavored oil and/or fat..
(3) An oil-based processed flavor with a cooked note obtained by the method for producing a oil-based processed flavor with a cooked note according to any one of items (1) to (2).
(4) A blended flavor containing the oil-based processed flavor with a cooked note according to item (3).
(5) Foods or beverages containing the oil-based processed flavor with a cooked note according to item (3) or the blended flavor according to item (4).

### Advantageous Effect of the Invention

The oil-based processed flavor with a cooked note obtained according to the production method of the invention has no unpleasant smell (so-called off-flavor with potatoes note or off-flavor in closed systems) intrinsic to extracts prepared in a closed system under pressure, and features a natural flavor giving a favorable cooked effect and a sense of unity. The flavor has a stronger impact and greater potency than extracts prepared in an open system. Through the use of the oil-based processed flavor with a cooked note of the invention, highly palatable foods or beverages having a natural cooked effect are provided.

In addition, the method for producing an oil-based processed flavor with a cooked note of the invention allows the production of the oil-based processed flavor with a cooked note having excellent properties using an existing apparatus which has been used for producing extracts of animal or vegetable origin as it is, without requiring additional complicated processes.

### Best Mode for Carrying Out the Invention

The present invention will be further illustrated below.

As described above, the method for producing an oil-based processed flavor with a cooked note of the invention, includes the steps of: placing a flavor-containing material to be extracted and an edible oil and/or fat in a closed vessel equipped with a collecting device for collecting generated vapor and gases, or in a vessel, which may be not completely closed, equipped with a device for forcibly collecting generated vapor and gases, such as a vacuum; and heating the flavor-containing material to be extracted and edible oil and/or fat in the vessel, followed by cooling the vessel, so that the material to be extracted is extracted with the edible oil and/or fat to form a flavored oil and/or fat.

In the method for producing an oil-based processed flavor with a cooked note of the invention, as the vessel equipped with a collecting device in which the flavor-containing material to be extracted and edible oil and/or fat are placed, there can be used a closed vessel which does not to release vapor and gases generated during heating of the flavor-containing material to be extracted and edible oil and/or fat except for from the portion having the collecting device, or a vessel which may be not completely closed but must be equipped with a device for forcibly collecting generated vapor and gases. No specific limitation is applied to the vessel as long as it is composed of a collecting device for collecting generated vapor and gases. Typical examples of the vessel include a metal or tempered glass vessel, such as an autoclave, equipped with a condenser or a resin vessel equipped with a condenser according to the system of heating. An autoclave is a device that has been widely used for producing flavoredoil by heating a food such as a meat, seafood, or vegetable together with an edible oil and/or fat of animal or vegetable origin in a closed system under pressure, and the device is known in the art. The collecting device attached to the vessel used in the invention cools gases containing water vapor generated during heating of the content in the vessel, and collects it in the form of a distillate. Even if the vessel is closed, the inside of the vessel is kept at an atmospheric pressure because the vessel is communicated with the outside air through the collecting device, such as a condenser. In this regard, the mode of use employing a closed vessel such as an autoclave is different from conventional modes of use. As necessary, a stirring device may be equipped to the vessel, and the mixture of the flavor-containing material to be extracted and the edible oil and/or fat may be stirred with it during heating or subsequent cooling, or during heating or cooling after return of the distillate to the vessel, which will be illustrated later. The content in the closed vessel may be heated from the outside of the vessel, or through heating means provided in the vessel.

In the present invention, the material to be extracted may be freely selected from known ones that have been used for producing oil-based processed flavors with a cooked note. Typical examples thereof include meat, seafood, processed goods thereof, such as hams, sausages, bacons, dried fish shavings, dried seafood, milks, dairy products, seaweeds, vegetables, fruits, grains, beans, nuts, coffees, teas, spices, seasonings or brews, saccharides, amino acids or nucleic acids, natural flavoring agents, and synthetic flavoring agents. These examples will be more specifically described below.

Examples of meat and seafood used in the present invention as the material to be extracted are listed below. Examples of meat include beef, pork, chicken, and mutton. Examples of the parts of the meat used in the invention include muscles, bowels, bones, and extracts. Other examples include processed meat products such as hams, sausages, and bacons . Examples of seafood include fishes such as tuna, bonito, horse mackerel, sardine, saury, conger, Pacific ocean perch, sweetfish, angler fish, eel, tilefish, halfbeak, sierra, capelin, sole, salangichthys, black sea bream, red sea bream, goby, salifin sandfish, conger eel, flounder, plaice, puffer fish, yellowtail, and smelt; cephalopod such as cuttlefish and octopus; clams such as short-neck clam, clam, freshwater clam, ark shell, mussel, cockle, Chinesemactra, Sakuhalin surf clam, bluemussel, fan-mussel, scallop, and oyster, and spiral shell such as turban shell and ear shell; crabs such as horse crab, snow crab, Hanasaki crab, red king crab, and swimming crab; shrimps or crayfishes such as deep-water shrimp Alaskan pink shrimp, spiny lobster, prawn, shiba shrimp, Sakura shrimp, lobster, and crayfish; and opossum shrimp such as neomysis, anisomysis, and krill. Usable regions of these fish and shellfish are, for example, meat such as fish meat, bowels, bones, shells, and extracts.

Dried fish shavings are processed goods of particularly lean fishes such as bonito, tuna, mackerel, sardine and saury, and examples thereof include dried bonito, dried bullet tuna, driedmackerel, dried sardine, dried mackerel scad, dried saury, steamed bonito, dried tuna, dried round herring, and dried sardine. In addition, dried fish and shellfish products may be used in the invention as a material to be extracted, and examples thereof include simply dried Japanese common squid, dried cod fish, dried Ago (flying fish), dried scallop, and dried shrimp.

Examples of milk or dairy products used in the invention include cream, condensed milk, skimmed milk powder, and various kinds of natural cheese and process cheese.

Examples of algae used in the invention include kelps such as Laminaria japonica, Rishiri kelp, and Laminaria angustata, wakame seaweed, laver, and hij iki, and processed algae such as dried kelp and dried wakame seaweed.

Examples of vegetables used in the invention include onion, shallot, scallion, chives, Wakegi green onion, Chinese chives, corn marigold, cabbage, lettuce, Chinese cabbage, spinach, indian mustard, Qing geng cai, leaf mustard, Japanese white radish, carrot, burdock root, beet, shiitake mushroom, pine mushroom, hen of the woods, mushroom, tomato, Angelica keiskei, bamboo shoot, greenpepper, Japanese honewort, parsley, Japanese parsley, celery, cauliflowers, corn, asparagus, bean sprouts, broccoli, melon, watermelon, saltwort, pumpkin, cucumber, bitter melon, eggplant, sweet potato, perilla, chili pepper, wild rocambole, Indian spinach, mugwort, garlic, horseradish, watercress, Zingiber mioga, ginger, Japanese horseradish, sesame, Japanese pepper, butterbur, and zha cai.

Examples of fruits used in the invention include apple, cherry, plum, apricot, orange, lemon, lime, mandarin, grapefruit, strawberry, banana, pineapple, grape, and kiwifruit.

Examples of grains used in the invention include rice, wheat, foxtailmillet, Japanesebarnyardmillet, buckwheat, corn, adlay, and brown rice.

Examples of beans used in the invention include soybean, azuki bean, black bean, pinto bean, and green pea.

Examples of nuts used in the invention include almond nut, cashew nut, peanut, hazelnut, walnut, pecan nut, chestnut, macadamia nut, pistachio nut, pine nut, and cacao bean.

Examples of teas used in the invention include green tea, tea, and oolong tea.

Examples of spices used in the invention include chili pepper, pepper, Japanese pepper, fresh garlic, Chinese chives, fresh ginger, cinnamon, turmeric, dried citrus unshiu peel, perilla, Japanese horseradish, anis, assa-foetida, ajowan, angelica, angelica seed, fennel, allspice, onion, oregano, orange,garlic,cayenne pepper,castoreum,cassia,cassia bark, capsicum, camomile, mustard, Indian mustard, cardamom, curry, curry leaf, licorice, caraway, carrot, cubeb, gardenia fruit, cumin, clary sage, clove, clove bud, clove leaf, watercress, caper, pine nut, pepper sassafras, burdock root, coriander, saffron, Satureia hortensis, Satureia hortensis summer savory, Japanese mushroom, shallot, camphor white oil, ginger, sweet bay, star anise, spearmint, sage, savory, horseradish, celery, celery seed, sorrel, turmeric, thyme, tamarind, tarragon, chervil, chive, chili, dill, tomato, scallion, nutmeg , worm wood, nigella, basil, parsley, mint, vanilla, hyssop, paprika, bitter almond, pimenta, fenegreek, buchu, bay leaf, peppermint, horse mint, horseradish, marjoram, mustard, pine mushroom, mix spice, Zingiber mioga, mace, lime, leek, linden, lemongrass, lemon, lemon balm, rose, rosemary, and laurel.

Examples of seasonings or brewed stuffs used in the invention include soy sauce and fish sauces such as nampla and Japanese fish sauce, salt, sauce, soybean paste, ketchup, vinegars such as rice vinegar, fruit vinegar, and grain vinegar, bean-based seasonings such as hot chili bean sauce, alcohol-based flavoring materials such as rice wine, sweet cooking rice wine, and wine, and sake lees.

Examples of saccharides used in the invention include saccharides such as xylose, ribose, hexose, pentose, glyceraldehyde, dihydroxy acetone, fructose, galactose, sucrose, glucose, maltose, lactose, cellobiose, trehalose, lactitol, and rhamnose, molasses, liquid sugar, honey, and maple sugar. Other examples include high potency sweeteners such as glycyrrhizin, dipotassium glycyrrhizate, thaumatin, monellin, sweet hydrangea leaf extract, licorice extract, Momoradica grosvenori extract, stevia, aspartame, alitame, potassium acesulfame, neohesperetin hydrochalcone, and saccharin sodium.

Examples of amino acids or nucleic acids used in the invention include glycine, alanine, cystine, cysteine, valine, lysine, methionine, isoleucine, leucine, tyrosine, phenylalanine, histidine, threonine, methionine, proline, hydroxyproline, serine, arginine, carnitine, histidine, tryptophan, asparagine, glutamine, glutamic acid, aspartic acid, adenosine triphosphate, adenosine diphosphate, adenylic acid, inosinic acid, guanylic acid, uridylic acid, cytidylic acid, inosine, hypoxanthine, animal and vegetable protein hydrolysate, and yeast extracts. The oil-based processed flavor with a cooked note of the invention may contain various kinds of natural flavor agents or synthetic flavor agents (see Non-patent Document 1 below) within the range which will not affect the invention.

Non-Patent Document 1: Japanese Patent Office Gazette, Collection of Well-known Prior Arts "Perfume Part II, Food Flavor" pp. 1060 to 1069, January 14, 2000

The material used in the invention as a material to be extracted may be fresh, dried, or frozen according to the properties of the materials. The fresh, dried, or frozen material may be a whole, dices, shavings, a triturate, or a mashed paste. Further, the material may have been subjected to extraction processing or other various kinds of processing.

The material to be extracted may be used alone or in combination of two or more kinds, and is preferably used in combination of two or more kinds. Combination of several kinds of the materials is allowed to produce a flavor having a favorable cooked effect. Particularly preferable examples include combinations of vegetables and/or meat and spices.

On the other hand, the edible oil and/or fat used as an extracting oil in the invention may be an animal or vegetable oil and/or fat, and may be a refined or processed animal or vegetable oil and/or fat. Examples of animal oils and/or fat include chicken oil, refined lard, cooker lard, pig bone oil, refined beef fat, cooker beef fat, and hardened beef fat. Examples of vegetable oils include rice oil, cottonseed oil, sesame oil, palm oil, corn oil, rapeseed oil, soybean oil, safflower oil, kapok oil, oily nut-based oil, olive oil, and coffee oil. Examples of refined or processed edible oils and fat include medium chain triglyceride (MCT) having 8 to 10 carbon atoms, medium chain diglyceride (MCD) having 8 to 10 carbon atoms, shortening, butter (butter oil), and margarine.

In the invention, the blending ratio between the material to be extracted and edible oil and/or fat used for the extraction of the oil-based processed flavor with a cooked note is preferably 95 to 5% by weight of the material to be extracted to 5 to 95% by weight of the edible oil and/or fat, and more preferably 80 to 20% by weight of the material to be extracted to 20 to 80% by weight of the edible oil and/or fat. According to the invention, the distillate must be collected into the collecting device, so that it needs to use the material to be extracted at least containing moisture. As necessary, water may be added to the material within a range which will not affect the invention. The moisture content of the material to be extracted is preferably 10 to 95% by weight, more preferably 20 to 80% by weight with reference to the whole amount of the material to be extracted.

In order to obtain a flavored oil, the material to be extracted and edible oil and/or fat are heated preferably under stirring in a closed vessel equipped with a collecting device, or in a vessel, which may be not completely closed, equipped with a device for forcibly collecting generated vapor and gases, such as a vacuum. The heating temperature is usually from 80°C to 300°C, preferably from 90°C to 200°C, and more preferably from 100°C to 150°C. When the heating temperature is 100°C or higher, evaporation of moisture from the material to be extracted is accelerated, and a favorable cooked odor is given to the flavored oil and distillate. The heating time varies according to the heating temperature, the kind of the material to be extracted and the edible oil and/or fat used, the amounts of the material to be extracted and edible oil and/or fat used, and the heating device used, but usually from 1 minute to 5 hours, and preferably 5 minutes to 3 hours. The time required to reach the predetermined temperature may be retention time or heating time. The heating operation is preferably continued at least until no more distillate is obtained by the collecting device attached to the apparatus, but as necessary, may be stopped with moisture remained in the extracted material. After the completion of extraction of the flavor from the material to be extracted through heating the contents in the vessel, the material to be extracted and edible oil and/or fat are once cooled. Gases containing water vapor evaporated during heating of the material to be extracted and edible oil and/or fat are cooled by the collecting device and collected outside the vessel in the form of a distillate. The amount of the distillate to be collected varies according to the shape or other properties of the vessel, but primarily depends on the moisture content of the raw materials. If the moisture of the raw materials is completely collected by the collecting device outside of the vessel, the amount of the distillate is substantially equal to the moisture content of the raw materials. Through the collection of the distillate, components volatilized during heating of the material to be extracted and edible oil and/or fat are recovered together with evaporated moisture. The collecting device may be, for example, a condenser with interchangeable ground joints (manufactured by Asahi Technoglass Corporation).

According to the invention, the material to be extracted and edible oil and/or fat are heated and the flavor of the material to be extracted transfers to the edible oil and/or fat, and thus a flavored oil being produced. After the completion of the extraction of the flavor from the material to be extracted, the mixture of the flavored oil and the residue of the extracted material are cooled. According to the invention, the distillate collected in the collecting device outside of the vessel is returned to the cooled vessel or, when the whole or partial of the content (for example, flavored oil) in the vessel is transferred from the cooled vessel to another vessel, the distillate is added to this another vessel, and then mixed with the flavored oil. The distillate contains volatile components generated during heating extraction, so that the return of the distillate to the flavored oil means the return of the volatile components to the flavored oil. The distillate may be returned directly to the cooled mixture of the flavored oil and the extracted residue of the material to be extracted, or returned to the flavored oil after the flavored oil is separated from the extracted residue of the material to be extracted. The amount of the distillate returned to the flavored oil is usually the whole amount of the distillate, but may be a part of the distillate as necessary.

Extraction of the flavor component from the distillate with the flavored oil is conducted by keeping or heating the distillate mixture at a low temperature, for example from 0°C to 110°C preferably from 10°C to 100°C, more preferably from 20°C to 80°C preferably under stirring after returning the distillate to the flavored oil. The temperature of keeping or heating must be not lower than the temperature at which the flavored oil is in a liquid state. At that time, the vessel may be closed as necessary. In particular, in cases where the heating temperature is, for example, higher than 100°C, the vessel must be closed, because moisture evaporates with boiling, which results in the loss of the returned flavor. In cases where the vessel is kept or heated at a temperature from 0°C to 110°C, the pressure in the vessel is, for example, from 100 Pa to 200 Pa, preferably from 100 Pa to 110 Pa, and more preferably atmospheric pressure. The time of keeping or heating varies according to the temperature of keeping or heating, but usually within 24 hours, preferably within 8 hours, and more preferably within 4 hours. In cases where the distillate is directly returned to the mixture of the extracted residue of the material to be extracted and the flavored oil and/or fat, the residue of the extracted material is separated from the mixed liquid after the completion of the extraction of the flavor from the distillate. The method for separating the extracted residue of the material to be extracted from the flavored oil and/or fat may be any method, and examples thereof include known methods used for solid-liquid separation, such as gravity separation, pressure separation, and centrifugation using a vibrating sieve, screw press, or screw decanter. In order to thoroughly extract the component of the material to be extracted, the separation operation is preferably conducted after the extraction residue is precipitated. The solid-liquid separation may be followed by clarification through filtration using a filter aid. According to the invention, the filtration using a filter aid may employ a commonly used method, and the filter aid may be selected as appropriate from those suitable to filtration of food, such as diatomaceous earth. Before the filtration using a filter aid, a known adsorbent such as PVPP (polyvinyl-polypyrrolidone) or active clay may be used.

Thus, the intended oil-based processed flavor with a cooked note is obtained. The resultant oil-based processed flavor with a cooked note may be turbid because of residual moisture. In that case, the moisture is removed to produce a more transparent flavor. The method for removing the moisture may be a moisture separation method commonly used, and examples thereof include centrifugation, standing separation, and clarifying filtration in which dehydration is conducted using a dehydrator such as anhydroussodiumsulfate, followed by filtration through a filter paper. As necessary, these methods may be appropriately combined to remove the moisture, thereby producing a clear oil-based processed flavor with a cooked note.

Alternatively, different from the above-described methods of returning the distillate, the oil-based processed flavor with a cooked note of the invention may be produced by a method comprising steps of extracting the distillate with another edible oil and/or fat at a low temperature, preferably under stirring, and then mixing the resultant second flavored oil (oil extract of the distillate) with the first flavored oil obtained by the extraction of the material to be extracted. The extraction treatment at a low temperature is conducted, for example, by heating the distillate and the new edible oil and/or fat at a low temperature, preferably under stirring. The heating temperature thereof may be the same as the temperature adopted when the distillate is returned to the flavored oil as it is and the transfer and extraction of flavor from the distillate are performed, more specifically, a temperature from 0°C to 110°C, preferably from 10°C to 100°C, and more preferably from 20°C to 80°C. The addition of the second flavored oil and/or fat to the first flavored oil and/or fat may be conducted at an appropriate time before and/or after the separation of the extracted residue of the material to be extracted. Thus, the intended oil-based processed flavor with a cooked note is produced.

The oil-based processed flavor with a cooked note produced by the production method of the invention presents no problem intrinsic to oil-based processed flavors with a cooked note produced by the conventional methods, has high potency, emits no off-flavor in closed systems, and has a natural taste and a strong impact. In particular, the oil-based processed flavor with a cooked note produced by the method including a step of returning the distillate to the cooled mixture of the flavored oil and the extracted residue of the material to be extracted has a strong favorable sweet taste, and leaves a strong lasting odor. The oil-based processed flavor with a cooked note produced by the method including a step of returning the second flavored oil, which is obtained by extracting the distillate with another edible oil or fat at a low temperature, to the first flavored oil has a generally weaker aroma (flavor) in comparison with the oil-based processed flavor with a cooked note produced by the method including a step of directly returning the distillate to the flavored oil, but has a unique note having a strong roasted taste.

The oil-based processed flavor with a cooked note produced by the production method of the invention is used as it is, or as a blended flavor by mixing optionally with, for example, a naturally-occurring or chemically synthesized flavoring agent, which was obtained by means other than the method of the invention. The thus obtained oil-based processed flavor with a cooked note or blended flavor containing the same may be added to or mixed with the product as it is or as a diluted liquid with an edible solvent (for example, ethanol, propylene glycol, or glycerol) or oil and/or fat. The addition of the flavoring agent to the product includes, for example, absorption thereof to the product by spraying an atomized liquid thereto. Alternatively, the flavor may be used in other arbitrary forms such as a soluble emulsion, a powder, or granules. For example, the flavor may be emulsified and solubilized by a known method using a synthetic surfactant such as polyglycerol fatty acid ester or a natural emulsifying agent such as lecithin to make a water-soluble flavor. Alternatively, the flavor may be mixed with an excipient such as saccharide, dextrin, or starch and a synthetic surfactant such as polyglycerol fatty acid ester, or mixed with an arbitrary emulsifying excipient such as gum arabic, gelatin, casein, or vegetable protein, and then the mixture is homogenized using, for example, a homogenizer to make an emulsified liquid, followed by being dried by a known method such as spray drying, freeze drying, or vacuum drying to make a powder or granular solid flavor. Alternatively, the oil-based processed flavor with a cooked note may be directly mixed with and adsorbed to an excipient such as dextrin to make an adsorption powder flavor. Alternatively, a composition containing the oil-based processed flavor with a cooked note may be pulverized or granulated using an extrusion method to make a powder or granulated flavor. By these methods, the oil-based processed flavor with a cooked note of the invention or the blended flavor containing the same is subjected to appropriate shaping treatment according to the intended use, and used as a flavoring agent.

Examples of the product to be mixed with the oil-based processed flavor with a cooked note of the invention or the blended flavor containing the same include various foods or beverages such as: snack food; frozen desserts such as sherbets and ice creams; microwave meals; retort-packed foods; soup foods; meat and fish pastes; dressings; seasonings such as flavoring materials, sauces, and liquid seasonings; instant noodles; beverages such as refreshing drinks, fruit juices, and carbonated drinks; syrups, candies; jams, preserved fruits; western confectionery such as cakes, bavarois, and mousse; prepared food; delicatessen; dainties; bakery product; chocolates; chewing gums; and margarines. Particularly preferable examples of the foods or beverages include larmens, curries, stews, snack foods, canned soups, powder soups, grilledmeat sauces, dressings, baked goods, candies, bakeries, chocolates, and ice creams.

The amount of the oil-based processed flavor with a cooked note of the invention or the blended flavor mixed with the oil-based processed flavor with a cooked note with reference to the weight of the above-described foods or beverages may be arbitrarily determined. The amount added is for example, from 0.01% to 50% by weight, preferably from 0.03% to 10% by weight, and more preferably from 0.05% to 1% by weight.

### Examples

The present invention is illustrated with reference to, but not limited to, the following examples. In the following examples, room temperature means a temperature from 20°C to 30°C.

### Example 1

700 g of rice salad oil and 100 g each of onion, garlic, and ginger, which was cut with a food cutter, were placed in an autoclave equipped with a condenser and heated up to a temperature of 140°C over a period of 120 minutes under stirring. At that time, the water vapor generated was collected through the condenser. The weight of the distillate collected was 160 g. After the temperature thereof reached 140°C, the autoclave was allowed to cool to room temperature and then the collected distillate was returned to the autoclave. After stirring the mixture for 15 minutes at room temperature, the extraction residue was separated and removed from the oil phase and the resultant oil phase was dehydrated to obtain a flavor A.

### Comparative Example 1

700 g of rice salad oil and each 100 g of onion, garlic, and ginger, cut with a food cutter, were placed in a closed type autoclave and heated over a period of 120 minutes to a temperature of 140°C under stirring at a closed condition. After the temperature thereof reached 140°C, the autoclave was allowed to cool to room temperature. After stirring the content for 15 minutes, the extraction residue was separated and removed from the oil phase, and the resultant oil phase was dehydrated to obtain a flavor B.

### Comparative Example 2

700 g of rice salad oil and each 100 g of onion, garlic, and ginger, which were cut with a food cutter, were placed in an open type flat kettle, and heated over a period of 120 minutes to a temperature of 140°C under stirring. After the temperature thereof reached 140°C, the flat kettle was allowed to cool to room temperature. After stirring the content for 15 minutes, the extraction residue was separated and removed from the oil phase and then the oil phase was dehydrated to obtain a flavor C.

### Comparison Test Example 1

The flavors A, B and C obtained in Example 1 and Comparative Examples 1 and 2 were subj ected to the determination of the amount of flavor ingredients and a sensory evaluation under the following conditions.

### <Determination of the amount of flavor ingredients>

The flavors A, B and C obtained in Example 1 and Comparative Examples 1 and 2 were subjected to an HS-GC/MS analysis to determine the amount of flavor ingredients. The results are listed in Table 1. The HS-GC/MS analysis was conducted under the following gas chromatography conditions.

### [Gas chromatography conditions]

A tightly closed vial was warmed to a temperature of 60°C in an autosampler for gas chromatography manufactured by PerkinElmer, Inc., and evaporated components were introduced into and analyzed with a gas chromatograph manufactured by Hewlett-Packard Company.
Column: BC-WAX (50 m x 0.25 mm, df = 0.25 µm) manufactured by GL Sciences Inc.
Temperature program: 60°C (5 minutes)->230°C (20 minutes) (programming heating rate: 5°C/minute)

**Table 1**

| | Example 1 | Comparative Example 1 | Comparative Example 2 |
|---|---|---|---|
| Peak area (when the amount of Comparative Example 2 is 1) | 16.3 | 16.9 | 1 |

### <Sensory evaluation>

The flavors A, B and C obtained in Example 1 and Comparative Examples 1 and 2 were subjected to a sensory evaluation by 9 professional panelists. The sensory evaluation was conducted as follows: 1 g each of the flavors A, B and C was individually placed in a 200-ml beaker, to which 100 ml of hot water was added, and the flavors A, B and C with a cooked note were evaluated relative to one another. The results are listed in Table 2. The numerals in Table 2 represent the numbers of panelists.

The evaluation of "persistence" was on the basis of the comparison of the potency sensorily evaluated at a point in time of 5 minutes after the addition of hot water.

**Table 2**

| | Example 1 | Comparative Example 1 | Comparative Example 2 |
|---|---|---|---|
| Having strong top impact | 8 | 1 | 0 |
| Having good persistence | 7 | 2 | 0 |
| Having strong off-flavor with potatoes note^{*)} | 0 | 9 | 0 |

| | | | |
|---|---|---|---|
| ^{*)} Off-flavor with potatoes note: Unpleasant smell coming with cooking, also called off-flavor in closed systems or musty malodor. It refers to smells generated by excessive heating under the closed condition. | | | |

The results in Tables 1 and 2 indicate that the flavor A with a cooked note obtained in Example 1 according to the invention has no unpleasant smell (so-called Off-flavor with potatoes note) characteristic of a conventional extract prepared in a closed system under pressure (oil-based processed flavor B with a cooked note), and features a natural flavor giving a favorable cooked taste and a sense of unity. It is also indicated that the flavor A has a stronger impact and higher potency than a conventional extract prepared in an open system (oil-based processed flavor C with a cooked note).

### Example 2

700 g of canola oil, 10 g of red pepper powder, 15 g of cumin powder, 5 g of mustard powder, 15 g of black pepper, 40 g of turmeric powder, 70 g of water, 30 g of an amino acid solution, 20 g of glucose, and 100 g each of onion, garlic and ginger, cut with a food cutter, were placed in an autoclave equipped with a condenser, and heated up to a temperature of 130°C under stirring. At that time, the water vapor generated was collected through the condenser. The weight of the collected distillate was 100 g. After the temperature thereof reached 130°C, the autoclave was allowed to cool to room temperature, and then the collected distillate was returned to the autoclave. After stirring the mixture at room temperature for 15 minutes, the extraction residue was separated and removed from the oil phase, and the oil phase was dehydrated to obtain a flavor D.

### Example 3

500 g of chicken oil, 350 g of dried sardine, 100 g of water, and 50 g of soy sauce were placed in an autoclave equipped with a condenser, and heated up to a temperature of 120°C under stirring. At that time, the water vapor generated was collected through the condenser. The weight of the collected distillate was 100 g. After the temperature thereof reached 120°C, the autoclave was allowed to cool to room temperature, and then the collected distillate was returned to the autoclave. After stirring the mixture at room temperature for 5 hours, the extraction residue was separated and removed from the oil phase, and the oil phase was dehydrated to obtain a flavor E.

### Example 4

400 g of rapeseed oil, 400 g of dried onion mince, 200 g of water were placed in an autoclave equipped with a condenser, and heated to a temperature of 150°C under stirring. At that time, the water vapor generated was collected through the condenser. The weight of the collected distillate was 150 g. After the temperature reached) 150°C, the autoclave was cooled down to room temperature, and then the collected distillate was returned to the autoclave. After stirring the mixture at room temperature for 1 hour, the extraction residue was separated and removed from the oil phase, and the oil phase was dehydrated to obtain a flavor F.

### Example 5

7.5 g of a soup mix according to the recipe in Table 3 below and 1.0 g of the flavor A of Example 1 were dissolved in 500 ml of boiling water to prepare a larmen soup A.

**Table 3: Soup mix recipe**

| Ingredients | Parts by weight |
|---|---|
| Refined salt | 30.6 |
| Granulated sugar | 5.0 |
| MSG* | 8.0 |
| Spice mixture | 3.0 |
| Powder soy sauce | 16.3 |
| Caramel | 2.5 |
| HVP** | 3.0 |
| Chicken extract powder | 4.0 |
| Powdered vegetable | 2.6 |
| Total | 75.0 |

| | |
|---|---|
| *MSG (monosodium glutamate) **HVP (hydrolysate of vegetable protein) | |

### Comparative Example 3

A larmen soup B was prepared in the same manner as in Example 5, except that the flavor B of Comparative Example 1 was used in place of the flavor A.

### Comparative Example 4

A larmen soup C was prepared in the same manner as in Example 5, except that the flavor C of Comparative Example 2 was used in place of the flavor A.

### Comparative Test Example 2

The larmen soups A, B and C obtained in Example 5, and Comparative Examples 3 and 4 were subjected to a sensory evaluation by the panelists. The results are listed in Table 4.

**Table 4**

| | Sensory evaluation result |
|---|---|
| Example 5 (larmen soup A) | Clear, light flavor. Harmonized with the flavors of the soup ingredients, gives a favorable and natural cooked taste. |
| Comparative Example 3 (larmen soup B) | Heavy flavor. Generally unclear. Gives an unpleasant smell. |
| Comparative Example 4 (larmen soup C) | Low potency. No outstanding characteristic. |

The results in Table 4 indicate that the oil-based processed flavor A with a cooked note obtained in Example 1 according to the invention provides a highly palatable larmen soup having a natural cooked taste, in comparison with a conventional extract prepared in a closed system under pressure (oil-based processed flavor B with a cooked note) or a conventional extract prepared in an open system (oil-based processed flavor C with a cooked note).

### Example 6

500 g of chicken oil, 100 g each of onion, garlic, and ginger, which were cut with a food cutter, and 200 g of chicken were placed in an autoclave equipped with a condenser, and heated to a temperature of 280°C over a period of 150 minutes under stirring. At that time, the water vapor generated was collected through the condenser. The weight of the collected distillate was 180 g. After the temperature reached 280°C, the autoclave was cooled down to a temperature around 100°C, and then the collected distillate was returned to the autoclave. After stirring the mixture at room temperature for 1 hour, the extraction residue was separated and removed from the oil phase, and the oil phase was dehydrated to obtain a chicken flavor G.

### Example 7

500 g of MCT, 200 g of coarsely ground cinnamon, and 150 g of water were placed in an autoclave equipped with a condenser, and heated up to a temperature of 100°C over a period of 90 minutes under stirring. At that time, the water vapor generated was collected through the condenser. The weight of the collected distillate was 120 g. After the temperature reached 100°C, the autoclave was cooled down to a temperature around 10°C, and then the collected distillate was returned to the autoclave. After stirring the mixture at room temperature for 4 hours, the extraction residue was separated and removed from the oil phase, and the oil phase was dehydrated to obtain a cinnamon flavor H.

### Example 8

500 g of chicken oil, 100 g onion which was cut with a food cutter, and 100 of dried sardine were placed in an autoclave equipped with a condenser, and heated up to a temperature of 150°C over a period of 150 minutes under stirring. At that time, the water vapor generated was collected through the condenser. The weight of the collected distillate was 200 g. After the temperature thereof reached 150°C, the autoclave was cooled down to room temperature, and the extraction residue was separated and removed from the oil phase. Thereafter, the collected distillate was returned to the autoclave and stirred for 2 hours at room temperature, and then the oil phase was dehydrated to obtain a dried sardine flavor I.

### Example 9

700 g of rice salad oil, 100 g of water, and 100 g each of dried garlic chips and dried onion mince were placed in an autoclave equipped with a condenser, and heated up to a temperature of 120°C over a period of 90 minutes under stirring. At that time, the water vapor generated was collected through the condenser. The weight of the collected distillate was 80 g. After reaching a temperature of 120°C, the autoclave was cooled down to room temperature, and the extraction residue was separated and removed from the oil phase. Thereafter, the collected distillate was returned to the autoclave and stirred for 1 hour at room temperature, and then the oil phase was dehydrated to obtain a vegetable flavor J.

### Example 10

400 g of rapeseed oil, 100 g of ginger which was cut with a food cutter, 150 g of dried ginger flakes, and 50 g of soy sauce were placed in an autoclave equipped with a condenser, and heated up to a temperature of 300°C over a period of 180 minutes under stirring. At that time, the water vapor generated was collected through the condenser. 170 g of the collected distillate and 50 g of rapeseed oil were placed in an eggplant-shaped flask, and stirred at a temperature of 40°C for 1 hour to obtain an oil extract of the distillate. On the other hand, after reaching a temperature of 300°C with collecting the distillate, the autoclave was cooled down to a temperature of 110°C. The previously obtained oil extract of the distillate was returned to the autoclave, and stirred at a temperature of 100°C for 30 minutes. Thereafter, the extraction residue was separated and removed, and the resultant oil phase was dehydrated to obtain a ginger flavor K.

### Example 11

500 g of chicken oil, 100 g each of onion and garlic, which was cut with a food cutter, 200 g of pork, 50 g of soy sauce, and 50 g of curry powder were placed in an autoclave equipped with a condenser, and heated up to a temperature of 180°C over a period of 120 minutes under stirring. At that time, the water vapor generated was collected through the condenser. 210 g of the collected distillate and 90 g of rice salad oil were placed in an eggplant-shaped flask, and stirred at a temperature of 15°C for 30 minutes to obtain an oil extract of the distillate. On the other hand, after reaching a temperature of 180°C with collecting the distillate, the autoclave was cooled down to room temperature, and the extraction residue was separated and removed from the oil phase. Thereafter, the previously obtained oil extract of the distillate was returned to the autoclave and stirred with the resultant oil phase at a temperature of 30°C for 30 minutes, and the oil phase was dehydrated to obtain a curry flavor L.

### Example 12

500 g of MCT, 200 g of almond which was cut with a food cutter, 50 g of soy sauce, and 100 g of water were placed in an autoclave equipped with a condenser, and heated up to a temperature of 180°C over a period of 120 minutes under stirring. At that time, the water vapor generated was collected through the condenser. 210 g of the collected distillate and 90 g of rice salad oil were placed in an eggplant-shaped flask, and stirred at a temperature of 15°C for 30 minutes to obtain an oil extract of the distillate. On the other hand, after reaching a temperature of 180°C with collecting the distillate, the autoclave was cooled down to room temperature, and the extraction residue was separated and removed from the oil phase. Thereafter, the previously obtained oil extract of the distillate was returned to the autoclave and stirred with the resultant oil phase at a temperature of 30°C for 30 minutes, and the oil phase was dehydrated to obtain an almond flavor M.

### Example 13

600 g of lard, 100 g each of onion, garlic, and ginger, which was cut with a food cutter, 50 g of soy sauce, and 200 g of pork were placed in an autoclave equipped with a condenser, and heated up to a temperature of 180°C over a period of 120 minutes under stirring. At that time, the water vapor generated was collected through the condenser. 210 g of the collected distillate and 90 g of rice salad oil were placed in an eggplant-shaped flask, and stirred at a temperature of 15°C for 30 minutes to obtain an oil extract of the distillate. On the other hand, after reaching a temperature of 180°C with collecting the distillate, the autoclave was cooled down to room temperature, and the extraction residue was separated and removed from the oil phase. Thereafter, the previously obtained oil extract of the distillate was returned to the autoclave and stirred at a temperature of 30°C for 30 minutes, and the resultant oil phase was dehydrated to obtain a pork flavor N.

### Example 14

A consommé flavor having the following composition was prepared using the chicken flavor G obtained in Example 6, as a blended flavor for snacks. The consommé flavor was subjected to sensory evaluation by the panelists. According to the evaluation, the consomme flavor of Example 14 was evaluated as it has a cooked taste like a boiling soup with emitting no smell of retort-packed foods and has high potency in comparison with consommé flavors including a chicken flavor prepared in a conventional closed or open extraction system.

### <Consommé flavor recipe>

| (Ingredients) | % by weiqht |
|---|---|
| 4-Methyl-β-hydroxyethyl thiazole | 5 |
| Tetrahydrothiophene-3-one | 1 |
| 2-Nonenal | 0.3 |
| Dimethyl sulfide | 1.1 |
| Methyl mercaptan | 0.5 |
| Chicken flavor G in Example 6 | 85 |
| Rice salad oil | 7.1 |
| Total | 100 |

### Example 15

A spice flavor having the following composition was prepared using the cinnamon flavor H obtained in Example 7 as a blended flavor for candies. The spice flavor was subjected to sensory evaluation by the professional panelists. According to the evaluation, the cinnamon flavor of Example 15 was evaluated as it has a strong flavor evaporated readily by heating of cinnamon and has a heated sweetness in comparison with spice flavors including a cinnamon flavor prepared in a conventional closed or open extraction system.

### <Spice flavor recipe>

| (Ingredients) | % by weight |
|---|---|
| Lemon oil | 20 |
| Lime oil | 6 |
| Nutmeg oil | 2 |
| Orange oil | 10 |
| Cinnamon flavor H in Example 7 | 62 |
| Total | 100 |

### Example 16

A sausage flavor having the following composition was prepared using the sardine flavor I obtained in Example 8 as a blended flavor for meat and fishery products. The sausage flavor was subjected to sensory evaluation by the professional panelists. According to the evaluation, the sausage flavor of Example 16 has a real fish meat taste particularly suitable for fish meat processed foods such as fish meat sausages and has a reduced undesirable fish smell in comparison with sausage flavors including a sardine flavor prepared in a conventional closed or open extraction system.

### <Sausage flavor recipe>

| (Ingredients) | % by weight |
|---|---|
| Caraway oil | 3 |
| Coriander oil | 1 |
| Marjoram oil | 0.5 |
| Dill oleoresin | 3 |
| Celery oleoresin | 2 |
| Sardine flavor I in Example 8 | 90.5 |
| Total | 100 |

### Example 17

A fried vegetable flavor having the following composition was prepared using the vegetable flavor J obtained in Example 9 as a blended flavor for chilled foods. The fried vegetable flavor was subjected to sensory evaluation by professional panelists. According to the evaluation, the fried vegetable flavor of Example 17 was evaluated as it has a natural cooked taste, and has high potency in comparison with fried vegetable flavors including a vegetable flavor prepared in a conventional closed or open extraction system.

### <Fried vegetable flavor recipe>

| (Ingredients) | % by weight |
|---|---|
| Dimethyl disulfide | 0.15 |
| Methylpropyl disulfide | 0.5 |
| Methylpropyl trisulfide | 0.8 |
| Vegetable flavor J in Example 9 | 95 |
| Rice salad oil | 3.55 |
| Total | 100 |

### Example 18

A drink flavor having the following composition was prepared using the ginger flavor K obtained in Example 10 as a blended flavor for beverages. The drink flavor was subjected to sensory evaluation by professional panelists. According to the evaluation, the drink flavor of Example 18 was evaluated as it has a natural ginger flavor and has a spicy taste in comparison with drink flavors including a ginger flavor prepared in a conventional closed or open extraction system.

### <Drink flavor recipe>

| (Ingredients) | % by weight |
|---|---|
| Phenylethyl alcohol | 0.05 |
| Bergamot oil | 0.25 |
| Lime oil | 0.5 |
| Ginger flavor K in Example 10 | 48.75 |
| Ethyl alcohol | 25 |
| Glycerol | 20 |
| Water | 5 |
| Total | 100 |

### Example 19

A curry flavor having the following composition was prepared using the curry flavor L obtained in Example 11 as a blended flavor for retort-packed foods. The curry flavor was subjected to sensory evaluation by professional panelists. According to the evaluation, the curry flavor of Example 19 was evaluated as it has a cooked taste of stewed curry and has high potency harmonized with the flavor of spices in comparison with curry flavors including a curry flavor prepared in a conventional closed or open extraction system.

### <Curry flavor recipe>

| (Ingredients) | % by weight |
|---|---|
| Coriander oil | 2 |
| Cumin oil | 3 |
| Cardamom oil | 1 |
| Curry flavor L in Example 11 | 94 |
| Total | 100 |

### Example 20

A nut flavor having the following composition was prepared using the almond flavor M obtained in Example 12 as a blended flavor for baked goods. The almond flavor was subjected to sensory evaluation by the professional panelists. According to the evaluation, the nut flavor of Example 20 was evaluated as it has a favorable taste of roasted almond and has high potency in comparison with nut flavors including an almond flavor prepared in a conventional closed or open extraction system.

### <Nut flavor>

| (Ingredients) | % by weight |
|---|---|
| Benzyl alcohol | 3 |
| Ethyl vanillin | 1 |
| Caproic acid | 1 |
| Almond flavor M in Example 12 | 60 |
| MCT | 35 |
| Total | 100 |

### Example 21

A pork bone flavor having the following composition was prepared using the pork flavor N obtained in Example 13 as a blended flavor for larmen. The pork bone flavor was subjected to sensory evaluation by the professional panelists. According to the evaluation, the pork bone flavor of Example 21 was evaluated as it has a natural cooked taste and a non-conventional strong flavor, and has high potency in comparison with pork bone flavors including a pork flavor prepared in a conventional closed or open extraction system.

### <Pork bone flavor>

| (Ingredients) | % by weight |
|---|---|
| Butanoic acid | 5 |
| Propionic acid | 1 |
| Isovaleric acid | 0.8 |
| 2-Acetylpyrrole | 1.1 |
| Pork flavor N in Example 13 | 90 |
| Rice salad oil | 2.1 |
| Total | 100 |

### Example 22

Using the pork bone flavor obtained in Example 21, a larmen soup was prepared according to the recipe in Table 5.

**Table 5: Larmen soup recipe**

| Ingredients | Parts by weight |
|---|---|
| Soy sauce | 60 |
| Salt | 10 |
| Onion powder | 1 |
| Garlic extract | 2 |
| White superior soft sugar | 3 |
| Chicken extract | 3 |
| Pork extract | 2 |
| Yeast extract | 1 |
| Lard | 2.5 |
| Bone pork flavor (Example 21) | 0.5 |
| Total | 85 |

### Example 23

Using the consomme flavor obtained in Example 14, a snack seasoning was prepared according to the recipe in Table 6 by an adsorption method, wherein the consomme flavor was adsorbed to dextrin and then mixed with other powder materials. 5 g of the adsorption type snack seasoning was mixed with 95 g of unseasoned potato chips in accordance with a common procedure, to prepare seasoned potato chips.

**Table 6: Snack seasoning recipe**

| Ingredients | Parts by weight |
|---|---|
| Sugar | 25 |
| MSG | 10 |
| Nucleic acid | 2 |
| Beef powder | 22.5 |
| Onion powder | 20 |
| Tomato powder | 3 |
| Black pepper powder | 1 |
| Celery powder | 0.5 |
| Salt | 10 |
| Dextrin | 5 |
| Consommé flavor (Example 14) | 1 |
| Total | 100 |

### Example 24

Using the spice flavor obtained in Example 15, candies were prepared according to the recipe in Table 7.

**Table 7: Candy recipe**

| Ingredients | Parts by weight |
|---|---|
| Glutinous starch syrup | 200 |
| Granulated sugar | 225 |
| Water | 74 |
| Spice flavor (Example 15) | 1 |
| Total | 500 |

### Example 25

Using the nut flavor obtained in Example 20, cookies were prepared according to the recipe in Table 8.

**Table 8: Cookie recipe**

| Ingredients | Parts by weight |
|---|---|
| Weak flour | 400 |
| Shortening | 140 |
| Sugar | 60 |
| Salt-free butter | 50 |
| Whole egg | 20 |
| Baking powder | 2 |
| Salt | 3 |
| Nut flavor (Example 20) | 0.6 |
| Water | 10 |
| Total | 685.6 |

### (Sensory evaluations of applications)

The above-described larmen soup, seasoned potato chips, candies, and cookies (in Examples 22 to 25) each were prepared according to ordinary methods. Through tasting of these, they were shown to be more favorable foods or beverages than conventional ones, because the flavors blended therein had a sufficiently strong flavor and they had a cooked taste suitable to each of them.

## Claims

1. A method for producing an oil-based processed flavor with a cooked note, comprising the steps of:
heating a flavor-containing material to be extracted with an edible oil and/or fat in an extraction vessel to form a flavored oil and/or fat;
at the same time, collecting generated gases containing water vapor in form of a distillate in a collection device, whereas the extraction vessel is equipped with a collecting device for collecting the distillate into the collecting device during heating;
cooling the vessel with the flavor-containing material to be extracted and the edible oil and/or fat;
adding the distillate comprising evaporated moisture to the flavored oil and/or fat and after the addition of the distillate, the mixture of the flavored oil and/or fat and the distillate is kept or heated at a low temperature between 0°C to 110°C at atmospheric pressure; and
separating the extracted material from the flavored oil and/or fat.

2. The method for producing an oil-based processed flavor with a cooked note according to claims 1, wherein the flavor-containing material to be extracted and the edible oil and/or fat are heated at a temperature between 80°C to 300°C to produce a flavored oil and/or fat.

3. An oil-based processed flavor with a cooked note obtained by the method for producing a oil-based processed flavor with a cooked note according to any one of claims 1 - 2.

4. A blended flavor containing the oil-based processed flavor with a cooked note according to claim 3.

5. Foods or beverages containing the oil-based processed flavor with a cooked note according to claim 3 or the blended flavor according to claim 4.

## Patentansprüche

1. Verfahren zur Herstellung eines verarbeiteten Geschmacks mit Röst-Note auf Öl-Basis, mit den Schritten:
Erhitzen des armomahaltigen, mit einem eßbaren Öl und/oder Fett in an Extraktionsbehälter zu extrahierenden Material zur Herstellung eines aromatisierten Öls und/oder Fettes;
gleichzeitig: Sammeln der entwickelten Gase mit einem Gehalt an Wasserdampf in Form eines Destillats in einer Sammeleinrichtung, wobei der Extraktionsbehälter mit einer Sammeleinrichtung zum Sammeln des Destillats im Extraktionsbehälter in die Sammeleinrichtung während des Erhitzens ausgerüstet ist,
Abkühlen des Behälters mit dem zu extrahierenden, aromahaltigen Material und dem eßbaren Öl und/oder Fett;
Zugabe des Destillats mit der verdampften Feuchtigkeit zum aromatisierten Öl und/oder Fett, wobei nach Zugabe des Destillats die Mischung des aromatisierten Öls und/oder Fettes und des Destillats auf eine niedrige Temperatur zwischen 0°C bis 110°C bei atmosphärischem Druck erwärmt oder gehalten wird; und
Trennen des extrahierten Materials vom aromatisierten Öl und/oder Fett.

2. Verfahren zur Herstellung eines verarbeiteten Geschmacks mit Röst-Note auf Öl-Basis nach Anspruch 1, wobei das aromahaltige, zu extrahierende Material und das eßbare Öl und/oder Fett auf eine Temperatur zwischen 80°C bis 300°C erwärmt werden, um ein aromatisiertes Öl und/oder Fett zu erhalten

3. Verarbeiteter Geschmack mit Röst-Note auf Öl-Basis, erhalten durch das Verfahren zur Herstellung eines verarbeiteten Geschmacks mit Röst-Note auf Öl-Basis nach einem der Ansprüche 1 - 2.

4. Gemischter Geschmacksstoff mit einem Gehalt an dem verarbeiteten Geschmack mit Röst-Note auf Öl-Basis nach Anspruch 3.

5. Nahrungsmittel oder Getränke mit einem Gehalt an dem verarbeiteten Geschmack mit Röst-Note auf Öl-Basis nach Anspruch 3 oder dem gemischten Geschmacksstoff nach Anspruch 4.

## Revendications

1. Procédé de fabrication un agent de saveur traité à base d'huile avec un arôme cuisiné, comprenant les étapes de:
- réchauffer un matériau contenant l'agent de saveur pour être extrait avec une huile comestible et/ou graisse dans un récipient d'extraction pour former une huile aromatisée et/ou graisse;
- dans le même temps, collecter les gaz générés contenant la vapeur d'eau dans la forme d'un distillât dans un dispositif collecteur, où le récipient d'extraction est équipé avec un dispositif collecteur pour collecter le distillât dans le dispositif collecteur pendant le réchauffage;
- refroidir le récipient avec le matériau contenant l'agent de saveur pour être extrait et l'huile comestible et/ou la graisse;
- ajouter le distillât comprenant l'humidité évaporée à l'huile aromatisée et/ou à la graisse et après l'addition du distillât, le mélange d'huile aromatisée et/ou de graisse et le distillât est tenu ou réchauffé à une basse température entre 0°C et 100°C à la pression atmosphérique; et
- séparer le matériau extrait de l'huile aromatisée et/ou de la graisse.

2. Procédé de fabrication un agent de saveur traité à base d'huile avec un arôme cuisiné selon la revendication 1, où le matériau contenant l'agent de saveur pour être extrait et l'huile comestible et/ou la graisse sont réchauffés à une température entre 80°C et 300°C pour produire une huile aromatisée et/ou graisse.

3. Agent de saveur traité à base d'huile avec un arôme cuisiné obtenu par le procédé de fabrication d'un agent de saveur traité à base d'huile avec un arôme cuisiné selon l'une quelconque des revendications 1-2.

4. Agent de saveur mixte contenant l'agent de saveur traité à base d'huile avec un arôme cuisiné selon la revendication 3.

5. Aliments ou des boissons contenant l'agent de saveur traité à base d'huile avec un arôme cuisiné selon la revendication 3 ou l'agent de saveur mixte selon la revendication 4.
